(19) **Europäisches Patentamt**
**European Patent Office**
**Office européen des brevets**

(11) **EP 1 257 904 B1**

(12) **EUROPÄISCHE PATENTSCHRIFT**

(45) Veröffentlichungstag und Bekanntmachung des Hinweises auf die Patenterteilung:
**01.10.2008 Patentblatt 2008/40**

(21) Anmeldenummer: **01964907.8**

(22) Anmeldetag: **23.08.2001**

(51) Int Cl.:
*G06F 7/58* *(2006.01)*

(86) Internationale Anmeldenummer:
**PCT/DE2001/003139**

(87) Internationale Veröffentlichungsnummer:
**WO 2002/019089 (07.03.2002 Gazette 2002/10)**

(54) **VERFAHREN ZUM ERZEUGEN EINER FOLGE VON ZUFALLSZAHLEN EINES 1/F-RAUSCHENS**

METHOD FOR THE GENERATION OF A SERIES OF RANDOM NUMBERS OF A 1/F NOISE

PROCEDE POUR PRODUIRE UNE SEQUENCE DE NOMBRES ALEATOIRES D'UN BRUIT EN 1/F

(84) Benannte Vertragsstaaten:
**DE GB**

(30) Priorität: **28.08.2000 US 648939**

(43) Veröffentlichungstag der Anmeldung:
**20.11.2002 Patentblatt 2002/47**

(73) Patentinhaber: **Qimonda AG**
**81739 München (DE)**

(72) Erfinder:
• **DENK, Georg**
  **83026 Rosenheim (DE)**
• **HILLERMEIER, Claus**
  **83236 Übersee (DE)**
• **SCHÄFFLER, Stefan**
  **86199 Augsburg (DE)**

(74) Vertreter: **Schweiger, Martin**
**Schweiger & Partner**
**Anwaltskanzlei**
**Karlstrasse 35**
**80333 München (DE)**

EP 1 257 904 B1

**Beschreibung**

Die Erfindung betrifft ein Verfahren zum Erzeugen von Folgen von Zufallszahlen eines 1/f-Rauschens.

Zufallszahlen eines 1/f-Rauschens können beispielsweise bei einer transienten Schaltkreissimulation eingesetzt werden, die Rauscheinflüsse berücksichtigt. Unter einem 1/f-Rauschen wird ein stochastischer Prozess mit einem bestimmten Frequenzspektrum verstanden, das mit der Gleichung

$$S(f) \propto \frac{1}{f^\beta}, \beta \in \,]0,1[$$

beschrieben werden kann.

1/f-Rauschquellen eignen sich zur Modellierung von Rauscheinflüssen in einer Vielzahl technischer und physikalischer Systeme sowie für Systeme zur Einschätzung und Vorhersage von Geschehnissen auf den Finanzmärkten. Insbesondere weisen viele elektronische Bauelemente wie beispielsweise pn-Dioden und MOS-Feldeffekttransistoren 1/f-Rauschquellen auf.

Es ist möglich, 1/f-Rauschquellen dadurch zu approximieren, daß eine Summation der Effekte vieler Rauschquellen durchgeführt wird, die als Frequenzspektrum jeweils ein Lorentz-Spektrum aufweisen. Solche Rauschquellen können beispielsweise durch die Systemantwort eines linearen zeitinvarianten Systems, das auch als LTI-System bezeichnet werden kann, modelliert werden, an dessen Systemeingang ein weisses Rauschen angelegt wird. Bei dieser Vorgehensweise ist von Nachteil, daß die Dimension des numerisch zu lösenden Differentialgleichungssystems über die Maßen aufgebläht wird. Dadurch ergeben sich lange Rechenzeiten und ein hoher Speicherbedarf eines Computersystems, das zur Simulation eines Systems verwendet wird, das dem Einfluß eines 1/f-Rauschens unterliegt.

Aus dem Dokument US-A-5 719 784 ist eine Vorrichtung und ein Verfahren zur Analyse von aus Gewebeproben gewonnenen Daten bekannt. Eine diesem Dokument zugrundeliegende Erkenntnis ist, daß die nicht zufällige Natur von Zell- und Gewebemikrostrukturen einem 1/f-Rauschen entspricht.

Aus dem Dokument US-A-6 161 075 ist ein Verfahren zur Fehlerschätzung und zur Meßfehleranalyse von mittels Satelliten erhobenen Umweltdaten bekannt. Dabei wird den gemessenen Daten das bei der Messung auftretende Rauschen hinzugefügt, um Nachbildungsfehler der Meßmodelle zu verringern.

Aus dem Dokument US-A-4 255 791 ist ein Signalwiederherstellungsmittel sowie ein Verfahren bekannt, bei dem ein Eingangssignal, das sowohl Informationen als auch Rauschen enthält, durch einen Signalerkenner mit einem Referenzsignal kombiniert wird und in eine Informationskomponente, die mit der Informationskomponente am Eingang korreliert ist, sowie in eine Rauschkomponente, die mit jeglichem anderen Signal im System unkorreliert ist, aufgetrennt wird.

Aus "Generating colored noise illustrates power, usefulness of the autocorrelation function", Matt Perry, erschienen in "Personal Engineering and Instrumentation News", März 1994, Seiten 65-71, (XP009089921) ist ein Verfahren bekannt, nach dem mit Hilfe der Cholesky-Zerlegung einer Covaranzmatrix aus normalverteilten Zufallszahlen Zufallszahlen eines 1/f-Rauschens mit einem gewünschten Spektralwert β erzeugt werden.

Es ist Aufgabe der Erfindung, ein Verfahren zum Erzeugen einer Folge von Zufallszahlen eines 1/f-Rauschens anzugeben, das schnell und mit geringem Rechenaufwand durchgeführt werden kann. Es ist weiterhin Aufgabe der Erfindung, ein verbessertes Verfahren zur Simulation eines technischen Systems anzugeben, das einem 1/f-Rauschen unterliegt. Schließlich soll auch ein Computerprogramm zur Bestimmung von Folgen von Zufallszahlen eines 1/f-Rauschens angegeben werden, das schnell ausgeführt werden kann und das nur wenig Ressourcen eines Computersystems beansprucht.

Diese Aufgabe wird durch die Gegenstände der unabhängigen Patentansprüche gelöst. Verbesserungen ergeben sich aus den jeweiligen Unteransprüchen.

Gemäß einem der Erfindung zugrundeliegenden Gedanken wird die numerische Integration eines Systempfades eines Systems, das 1/f-Rauscheinflüssen unterliegt, bei einer konstanten Integrationsschrittweite auf die Simulation von Sequenzen geeignet korrelierter Zufallszahlen zurückgeführt. Es wird ein Batch-Verfahren verwendet, um Sequenzen von solchen Zufallszahlen zu generieren. In diesem Zusammenhang ist unter dem Begriff "Batch-Verfahren" zu verstehen, daß die Länge der Sequenz der Zufallszahlen beliebig sein darf. Beim Start des Verfahrens müssen die Zufallszahlen jedoch vorgegeben sein, wobei die gesamte Zufallszahlen-Sequenz in einem ersten Rechenschritt erzeugt wird. Mit dem erfindungsgemäßen Verfahren ist es möglich, bei konstanter Integrationsschrittweite eine Aufblähung der Dimension des numerisch zu lösenden Differentialgleichungssystems zu vermeiden. Dadurch werden erhebliche Rechenzeitgewinne erzielt.

Gemäß einem weiteren der Erfindung zugrundeliegenden Gedanken wird die Leistungsfähigkeit der numerischen Bestimmung der

Dynamik des simulierten Systems durch adaptive Schrittweitensteuerung erheblich gesteigert. Mit der Erfindung wird nämlich ein Verfahren angegeben, das es erlaubt, eine adaptive Schrittweitensteuerung und eine numerische Simulation von 1/f-Rauschquellen miteinander zu kombinieren, wobei die Simulation von 1/f-Rauschen in eine transiente Systemsimulation mit adaptiv gesteuerter Schrittweite einbindbar ist. Die Erfindung erlaubt es, die bekannten Methoden zur adaptiven Schrittweitensteuerung mit einer numerischen Simulation von 1/f-Rauschquellen zu kombinieren, ohne daß die Systemdimension aufgebläht wird. Hierzu wird nach einem zweistufigen Verfahren vorgegangen. In einer ersten Stufe wird die Systemdynamik unter Verwendung einer adaptiven Schrittweitensteuerung numerisch integriert, wobei die 1/f-Rauschquellen noch nicht berücksichtigt werden. Die dabei bestimmten adaptiven Schrittweiten dienen als Grundlage eines zweiten Integrationsdurchlaufs, in dem die 1/f-Rauschquellen berücksichtigt werden, deren Anteil anhand der in der ersten Stufe der Simulation erhaltenen Informationen bestimmt werden. Durch die Erfindung wird es somit ermöglicht, bei der transienten Simulation eines Systems die Vorteile adaptiver Schrittweitensteuerung zusammen mit einer vereinfachten numerischen Simulation von 1/f-Rauschquellen zu nutzen. Dadurch ergibt sich eine erhöhte numerische Approximationsgüte der Simulation bei einer effizienten Nutzung der zur Verfügung stehenden Rechenzeitressourcen, wobei eine Aufblähung der Systemdimension vermieden wird.

Gemäß der Erfindung wird das Problem der Rauschsimulation bei der Modellierung des zu simulierenden Systems in das Problem der Generierung einer Zufallszahlen-Sequenz überführt. Gemäß der Erfindung werden die Korrelationen dieser Zufallszahlen bestimmt, was zu einer einfachen und genauen Generierung der entsprechenden Zufallszahlen-Sequenzen verwendet wird.

Die erfindungsgemäßen Verfahren zum Erzeugen einer Folge von Zufallszahlen eines 1/f-Rauschens sehen als Schritte insbesondere das Bilden einer Covarianzmatrix $\underline{C}$ vor, aus der nachfolgend die Cholesky-Zerlegung $\underline{L}$ gebildet wird. Die Covarianzmatrix $\underline{C}$ unterscheidet sich dabei in dem Fall, in dem eine konstante Simulationsschrittweite $\delta$ angewendet wird, von demjenigen Fall, in dem eine adaptive Schrittweite angewendet wird.

Für den Fall einer konstanten Schrittweite $\delta$ wird die Covarianzmatrix unter Kenntnis eines gewünschten Spektralwerts $\beta$, der Anzahl n der zu erzeugenden Zufallszahlen eines 1/f-Rauschens und der Intensitätskonstante const elementweise bestimmt, wobei je ein Element e(i,j) der Covarianzmatrix C nach der folgenden Gleichung bestimmt wird:

$$e(i,j) = const \cdot |\delta|^{\beta+1} \cdot \left( |i-j+1|^{\beta+1} - 2|i-j|^{\beta+1} + |i-j-1|^{\beta+1} \right)$$

wobei i,j = 1, ..., n.

Nachfolgend wird die Cholesky-Zerlegung $\underline{L}$ der Covarianzmatrix $\underline{C}$ gebildet, wobei $\underline{C} = \underline{L} \cdot \underline{L}^T$, wobei $\underline{L}$ die Form einer Dreiecksmatrix annimmt, bei der nur die Diagonale und die untere Hälfte besetzt ist.

Mit Hilfe der so aufgefundenen Cholesky-Zerlegung $\underline{L}$ können nun beliebig viele Folgen von Zufallszahlen eines 1/f-Rauschens erzeugt werden. Hierzu wird zunächst ein Vektor $\underline{x}$ der Länge n aus (0,1) normalverteilten Zufallszahlen gebildet. Solche normalverteilten Zufallszahlen weisen einen Erwartungswert 0 sowie eine Varianz 1 auf. Sie können auf bekannte Weise durch Transformation aus einem gleichlangen Vektor gleichverteilter Zufallszahlen bestimmt werden.

Der gesuchte Vektor $\underline{y}$ mit den gewünschten 1/f-verteilten Zufallszahlen ergibt sich dann durch Multiplizieren der Cholesky-Zerlegung $\underline{L}$ mit dem Vektor $\underline{x}$.

Bei dem erfindungsgemäßen Verfahren, das eine adaptive numerische Lösung stochastischer Differentialgleichungen ermöglicht, wird im wesentlichen wie vorstehend beschrieben vorgegangen. Im Unterschied zur vorstehend beschriebenen Vorgehensweise kann jedoch nicht von einer konstanten Simulationsschrittweite $\delta$ ausgegangen werden. Vielmehr muß zunächst ein Schrittweitenvektor $\underline{\delta}$ berechnet werden, der sich aus vorgegebenen Betrachtungszeitpunkten $t_0$ - $t_n$ im ersten Schritt der Simulation ergibt. Danach wird die Covarianzmatrix $\underline{C}$ durch Bestimmen deren Elemente nach der folgenden Gleichung aufgestellt:

$$e(i,j) = const \cdot \left( -|t_j - t_i|^{\beta+1} + |t_{j-1} - t_i|^{\beta+1} + |t_j - t_{i-1}|^{\beta+1} - |t_{j-1} - t_{i-1}|^{\beta+1} \right)$$

wobei i,j = 1, ..., n.

Dem Konzept zur Simulation von 1/f-Rauschen liegt der folgende Gedankengang zugrunde. Die Dynamik eines Systems, das stochastischen Einflüssen ausgesetzt ist, wird adäquat durch einen stochastischen Prozeß modelliert. Zur Simulation einer solchen Systemdynamik werden im allgemeinen einzelne Zufalls-Realisierungen (sogenannte Pfade) des zugrundeliegenden stochastischen Prozesses numerisch berechnet. Zur Simulation von Systemen mit 1/f-Rauschquellen gilt es, Pfade von stochastischen Integralen der Form $\int_0^t Y(s)\,\eta_{\frac{1}{f}}(s)\,ds$ numerisch zu berechnen.

Hierbei bezeichnen s (Integrationsvariable) und t (obere Integrationsgrenze) die Zeit, $\eta_{\frac{1}{f}}(s)\,ds$ eine 1/f-Rauschquelle und Y(s) einen stochastischen Prozess, der die zeitliche Dynamik einer Größe, z.B. der elektrischen Spannung in der Schaltkreissimulation, beschreibt.

Wenn man mit $B_{FBM}$ (s) denjenigen stochastischen Prozess bezeichnet, dessen Ableitung (mathematisch: Ableitung im Distributionssinn) den 1/f-Rauschprozess $\eta_{\frac{1}{f}}(s)$ ergibt, so lässt sich das zu berechnende stochastische Integral schreiben als

$$\int_0^t Y(s)\,\eta_{\frac{1}{f}}(s)\,ds \;=\; \int_0^t Y(s)\,dB_{FBM}(s) \qquad (1.1)$$

Das Integral der rechten Seite ist als Riemann-Stieltjes-Integral des stochastischen Prozesses Y(s) mit dem Prozess $B_{FBM}$(s) als Integrator aufzufassen. Dieses Integral lässt sich durch eine Summe approximieren, indem das Integrationsintervall [0,t] gemäß $0 \equiv t_0 < t_1 < \ldots < t \equiv t$ in n disjunkte Teilintervalle [ti, $t_{i-1}$], i=1, ... n, zerlegt wird:

$$\int_0^t Y(s)\,dB_{FBM}(s) \;\approx\; \sum_{i=1}^{n} Y(t_{i-1})\left[B_{FBM}(t_i) - B_{FBM}(t_{i-1})\right] \qquad (1.2)$$

Diese Summe ist eine Zufallsvariable. Die Abhängigkeit vom Ergebnis ω des Zufallsexperiments wurde konsistent weggelassen.

Ein Prozess $B_{FBM}$(s), dessen verallgemeinerte Ableitung ein 1/f-Spektrum aufweist, ist in der Literatur unter dem Namen 'Fractional Brownian Motion' bekannt. $B_{FBM}$(s) ist ein Gaußscher stochastischer Prozess und als solcher vollständig charakterisiert durch seinen Erwartungswert

$$E\big(B_{FBM}(s)\big) \;=\; 0 \;\forall\; s \in R \qquad (1.3)$$

und durch seine Covarianzfunktion

$$Cov\big(B_{FBM}(s), B_{FBM}(t)\big) \;=\; const \cdot \left(|s|^{\beta+1} + |t|^{\beta+1} - |t-s|^{\beta+1}\right) \qquad (1.4)$$

Die erfindungsgemäße Batch-Methode zur Generierung geeigneter Zufallszahlen führt die Sumulation von 1/f-Rauscheinflüssen im wesentlichen auf die Erzeugung von Realisierungen der Zufallsvariablen [$B_{FBM}(t_i)$ - $B_{FBM}$ ($t_{i-1}$)] , also von Zuwächsen der Fractional Brownian Motion, zurück.

Zur numerischen Lösung stochastischer Differentialgleichungen mit $\frac{1}{f^\beta}$-Rauschquellen sei die Schrittweite der numerischen Integration konstant auf den Wert δ > 0 gesetzt und eine Zahl n∈ N (beliebig) gewählt, die die Anzahl der Zeitschritte, über die numerisch integriert werden soll, festlegt.

Für diese konstante Schrittweite und dieses feste Integrationsintervall sollen nun die benötigten korrelierten Zufallszahlen alle auf einmal, d.h. im Zuge eines Batchverfahrens, generiert werden.

Um einen Pfad des Integrals $\int_0^t Y(s) dB_{FBM}(s)$ approximativ zu berechnen, wird entsprechend dem Vorstehenden jeweils eine Realisierung der Zufallsvariablen $\Delta B_{FBM}(i) := [B_{FBM}(i\delta)-B_{FBM}((i-)1)\delta)]$, i=1, ..., n, benötigt. Aus den Formeln (1.3) und (1.4) lassen sich Erwartungswert, Varianz und Covarianz dieser untereinander korrelierten Zufallsvariablen berechnen:

$$\text{E} \ (\Delta B_{FBM}(i)) \quad = \quad 0, \ i=1, \ ..., \ n \qquad\qquad (2.5)$$

$$\text{Var} \ (\Delta B_{FBM}(i)) \quad = \quad 2 \ \cdot \ \text{const} \ \cdot |\delta|^{\beta+1}, \ i=1, \ ...,n \quad (2.6)$$

$$\text{Cov}(\Delta B_{FBM}(i), \ \Delta B_{FBM}(j)) = \text{const} \ \cdot \ |\delta|^{\beta+1} \cdot (|i-j+1|^{\beta+1}$$
$$- \ 2|i-j|^{\beta+1} \ + \ |i-j-1|^{\beta+1}),$$
$$i,j \ = \ 1, \ ..., \ n \qquad\qquad (2.7)$$

Da die Zufallsvariablen $\Delta B_{FBM}(i)$ Zuwächse eines Gaußschen stochastischen Prozesses darstellen, ist der Zufallsvariablen-Vektor $(\Delta B_{FBm}(1), ..., \Delta B_{FBM}(n))$ eine n-dimensionale Gauß-verteilte Zufallsvariable und somit durch Erwartungswert, Varianz und Covarianz (gemäß Formeln (2.5) bis (2.7)) vollständig bestimmt.

Ein Batch-Verfahren zur Erzeugung jeweils einer Realisierung der korrelierten Zufallsvariablen $\Delta B_{FBM}(1),..., \Delta B_{FBM}(n)$ lautet somit:

Wähle einen Wert des Koeffizienten const > 0, der die Intensität der 1/f-Rauschquelle parametrisiert Erzeuge eine Realisierung einer n-dimensionalen Gaußschen Normalverteilung mit Erwartungswert 0 und Covarianzmatrix

$$Cov_{ij} \quad = \quad const \cdot |\delta|^{\beta+1} \cdot \left(|i-j+1|^{\beta+1} - 2|i-j|^{\beta+1} + |i-j-1|^{\beta+1}\right), i, j = 1,...,n. \qquad (2.8)$$

Interpretiere den so generierten Zufallszahlen-Vektor als Realisierung der Sequenz von $B_{FBM}$-Zuwächsen $\{\Delta B_{FBM}(1), ..., \Delta B_{FBM}(n)\}$ und verwende diese Realisierung gemäß Abschnitt 1 zur numerischen Berechnung eines stochastischen Pfades der Zeitlänge $n \cdot \delta$.

Es sei darauf hingewiesen, daß für jede 1/f-Rauschquelle im System eine eigene Realisierung der Sequenz $\{\Delta B_{FBM}(1),..., \Delta B_{FBM}(n)\}$ berechnet werden muss.

Bei den Batch-Verfahren zur numerischen Lösung stochastischer Differentialgleichungen mit $\dfrac{1}{f^{\beta}}$-Rauschquellen bei adaptiver Schrittweite wird wie folgt vorgegangen.

Zunächst wird eine adaptive Schrittweitenbestimmung durchgeführt. Die Güte der Approximation (1.2) hängt wesentlich von der Zerlegung des Integrationsintervalls [0,t] in disjunkte Teilintervalle $[t_i, t_{i-1}]$, i=1, ..., n, ab. Bei der numerischen Lösung deterministischer Differentialgleichungen gibt es Verfahren zur Schrittweitensteuerung, die die Schrittweite - d.h. die Länge des aktuell bearbeiteten Teilintervalls - an die jeweils aktuelle Zeitskala der Systemdynamik anpassen und somit dafür sorgen, dass die verfügbare Rechenzeit möglichst gezielt zur Erhöhung der numerischen Approximationsgenauigkeit verwendet wird. Eine mögliche Schrittweitensteuerung ist folgendermaßen spezifiziert:

Gib einen tolerablen lokalen Diskretisierungsfehler $e_{max}>0$ vor.

Schätze den aktuellen lokalen Fehler $e_{lok}$ (d.h. den im aktuellen Integrations-Teilschritt generierten Fehlerbeitrag zum Approximationsfehler) ab. Diese Abschätzung kann auf eine der folgenden Arten geschehen:

a) Wiederhole den letzten Iterationsschritt mit halbierter Schrittweite und bilde die Differenz der beiden Ereignisse.

b) Vergleiche das Resultat der aktuellen Verfahrensvorschrift mit dem Resultat einer Verfahrensvorschrift höherer Fehlerordnung ("Einbettung"), z.B. mittels einer Runge-Kutta-Methode.

c) Direkte Approximation unter Verwendung eines numerischen Differenzenquotienten, z.B. mit Hilfe von Polynominterpolation.

Ist der abgeschätzte lokale Fehler $e_{lok}$ größer als $e_{max}$, so wird der aktuelle Schritt verworfen, ansonsten akzeptiert (a posteriori Schätzer).

Die Schrittweite des nächsten Schrittes wird durch Vergleich von $e_{lok}$ mit $e_{max}$ bestimmt. Falls $e_{lok}<e_{max}$, wird die Schrittweite vergrößert, ansonsten verkleinert (a priori Schätzer). Das Abschätzungsverfahren für den lokalen Fehler $e_{lok}$ kann für a-priori- und a-posteriori-Schätzer unterschiedlich gewählt werden.

Die vorliegende Erfindung beschreibt ein Verfahren, das es ermöglicht, die Verbesserung der Approximationsgenauigkeit mittels Schrittweitensteuerung auch für die Simulation von 1/f-Rauschen zu nutzen.

Hierfür wird die numerische Integration in 2 Stufen durchgeführt.

(A) In Stufe (A) wird die gewünschte Integrationszeit t>0 vorgegeben, und die Systemdynamik wird unter Vernachlässigung der 1/f-Rauschquellen berechnet. Dies geschieht durch numerisches Lösen des Systems gewöhnlicher (oder Algebro-)-Differentialgleichungen, das den deterministischen Anteil der Systemdynamik beschreibt. Während dieser Stufe-A-Integration wird ein Verfahren zur Schrittweitenanpassung eingesetzt, z.B. das oben beschriebene. Nach dem Durchlauf der Stufe-A-Integration liegt als Ergebnis der Schrittweitenanpassung eine Sequenz akzeptierter Schrittweiten und somit eine Unterteilung des Integrationsintervalls [0,t] in disjunkte Teilintervalle $[t_i, t_{i-1}]$, i = 1, ... n, vor. Die Zahl n benötigter Teilintervalle ist ebenfalls ein Resultat der Schrittweitensteuerung.

(B) Der Stufe-A-Integration wird ein zweiter numerischer Integrationslauf nachgeschaltet, der sich über dasselbe Integrationsintervall [0,1] erstreckt. Nun werden auch die 1/f-Rauschquellen in die Simulation der Systemdynamik miteinbezogen. Als einziges Ergebnis aus dem Integrationslauf (A) wird die Diskretisierung des Integrationsintervalls [0,t] in disjunkte Teilintervalle $[t_i, t_{i-1}]$, i = 1, ... n, sowie die Zahl n benötigter Teilintervalle verwendet. Die Simulation der Systemdynamik folgt dem obenstehend vorgestellten Konzept. Dabei werden die benötigten Realisierungen der Zufallsvariablen $[B_{FBM},(t_i)-B_{FBM}(t_{i-1})]$ nach einem Verfahren generiert, das im Folgenden vorgestellt wird.

Gegeben sei eine Unterteilung des Integrationsintervalls [0,t] in n Teilintervalle $[t_i, t_{i-1}]$, i = 1, ... n, wobei $0 \equiv t_0 < t_1 < ... < t \equiv t$.

Um einen Pfad des Integrals $\int_0^t Y(s)dB_{FBM}(s)$ approximativ zu berechnen, wird wie obenstehend beschrieben jeweils eine Realisierung der Zufallsvariablen $\Delta B_{FBM}(i) := [B_{FBM}(t_i)-B_{FBM}(t_{i-1})]$, i=1,...n, benötigt. Aus den Formeln (1.3) und 1.4) lassen sich Erwartungswert, Varianz und Covarianz dieser untereinander korrelierten Zufallszahlen berechnen:

$$E\ (\Delta B_{FBM}(i)) \quad = 0,\ i=1,\ ...,\ n \qquad\qquad (3.5)$$

$$Var\ (\Delta B_{FBM}(i)) \quad = 2 \cdot const\ |t_i - t_{i-1}|^{\beta+1},\ i=1,\ ...,n \quad (3.6)$$

$$Cov(\Delta B_{FBM}(i), \Delta B_{FBM}(j)) = const \cdot \ |t_j - t_i|^{\beta+1} + |t_{j-1} - t_i|^{\beta+1}$$
$$+ |t_j - t_{i-1}|^{\beta+1} - |t_{j-1} - t_{i-1}|^{\beta+1}),$$
$$i,j = 1,\ ...,\ n \qquad\qquad (3.7)$$

Da die Zufallsvariablen $\Delta B_{FBM}(i)$ Zuwächse eines Gaußschen stochastischen Prozesses darstellen, ist der Zufallsvariablen-Vektor $(\Delta B_{FBM}(1),..., \Delta B_{FBM}(n))$ eine n-dimensionale Gauß-verteilte Zufallsvariable und somit durch Erwartungswert, Varianz und Covarianz (gemäß Formeln (3.5) bis (3.7)) vollständig bestimmt.

Ein Batch-Verfahren zur Erzeugung jeweils einer Realisierung der korrelierten Zufallsvariablen $\Delta B_{FBM}(1)$, ... , $\Delta B_{FBM}(n)$ lautet somit:

Wähle einen Wert des Koeffizienten const > 0, der die Intensität der 1/f-Rauschquelle parametrisiert

Erzeuge eine Realisierung einer n-dimensionalen Gaußschen Normalverteilung mit Erwartungswert 0 und Covarianzmatrix

$$Cov_{ij} = const \cdot \left(-\left|t_j - t_i\right|^{\beta+1} + \left|t_{j-1} - t_i\right|^{\beta+1} + \left|t_j - t_{i-1}\right|^{\beta+1} - \left|t_{j-1} - t_{i-1}\right|^{\beta+1}\right), \quad (3.8)$$
$$i, j = 1, ..., n.$$

Interpretiere den so generierten Zufallszahlen-Vektor als Realisierung der Sequenz von $B_{FBM}$-Zuwächsen $\{\Delta B_{FBM}(1),..., \Delta B_{FBM}(n)\}$ und verwende diese Realisierung wie obenstehend ausgeführt zur numerischen Berechnung eines stochastischen Pfades für das Zeitintervall [0,1].

Es sei darauf hingewiesen, dass für jede 1/f-Rauschquelle im System eine eigene Realisierung der Sequenz $(\Delta B_{FBM}(1),..., \Delta B_{FBM}(n)\}$ berechnet werden muß.

Wenn nicht alle Elemente der Covarianzmatrix $\underline{C}$ bestimmt werden, wobei die nicht berechneten Elemente mit dem Wert 0 besetzt werden, ergibt sich eine noch schnelle Berechnung. Allerdings müssen dann Einschränkungen hinsichtlich der Genauigkeit der erzeugten Zufallszahlen in Kauf genommen werden.

Die Erfindung ist auch in einem Verfahren zur Simulation eines technisches Systems, das einem 1/f-Rauschen unterliegt, verwirklicht, wobei bei der Modellierung und/oder bei der Festlegung der an Eingangskanälen des Systems anliegenden Größen Zufallszahlen verwendet werden, die mit einem erfindungsgemäßen Verfahren bestimmt worden sind.

Ebenso ist ein Computerprogramm zur Bestimmung von Folgen von Zufallszahlen eines 1/f-Rauschens vorgesehen, das so ausgebildet ist, daß das erfindungsgemäße Verfahren ausführbar ist. Die Erfindung ist auch in einem Datenträger mit einem solchen Computerprogramm verwirklicht. Weiterhin ist die Erfindung in einem Verfahren verwirklicht, bei dem ein erfindungsgemäßes Computerprogramm aus einem elektronischen Datennetz wie beispielsweise aus dem Internet auf einen an das Datennetz angeschlossenen Computer heruntergeladen wird.

Die Erfindung ist in der Zeichnung anhand mehrerer Ausführungsbeispiele erläutert.

Figur 1     zeigt eine schematische Darstellung eines zu simulierenden technischen Systems,
Figur 2     zeigt ein Struktogramm zur Bestimmung von Folgen von Zufallszahlen eines 1/f-Rauschens,
Figur 3     zeigt eine Covarianzmatrix $\underline{C}$ der Dimension (6 x 6), zur Erzeugung eines Vektors $\underline{y}$ der Länge 6 von 1/f-verteilten Zufallszahlen bei einer konstanten Simulationsschrittweite $\delta$,
Figur 4     zeigt die Cholesky-Zerlegung $\underline{L}$ der Covarianzmatrix $\underline{C}$ aus Figur 3,
Figur 5     zeigt drei Vektoren $\underline{x}$ der Länge 6 aus (0,1) normalverteilten Zufallszahlen,
Figur 6     zeigt drei Vektoren $\underline{y}$ der Länge 6 mit 1/f-verteilten Zufallszahlen bei konstanter Schrittweite,
Figur 7     zeigt Betrachtungszeitpunkte $t_0$ bis $t_6$,
Figur 8     zeigt eine Covarianzmatrix $\underline{C}$ der Dimension (6 x 6), die aus den Betrachtungszeitpunkten aus Figur 7 berechnet worden ist,
Figur 9     zeigt die Cholesky-Zerlegung $\underline{L}$ der Covarianzmatrix $\underline{C}$ aus Figur 9,
Figur 10     zeigt drei Vektoren $\underline{y}$ der Länge 6 mit 1/f-verteilten Zufallszahlen bei adaptiver Schrittweite zu Betrachtungszeitpunkten nach Figur 7,
Figur 11     zeigt eine Covarianzmatrix $\underline{C}$ eines weiteren Ausführungsbeispiels einer Simulation mit adaptiver Schrittweite,
Figur 12     zeigt die Cholesky-Zerlegung $\underline{L}$ der Covarianzmatrix $\underline{C}$ aus Figur 13.
Figur 13     zeigt drei Vektoren $\underline{y}$ der Länge 6 mit annähernd 1/f-verteilten Zufallszahlen zu Betrachtungszeitpunkten nach Figur 7.

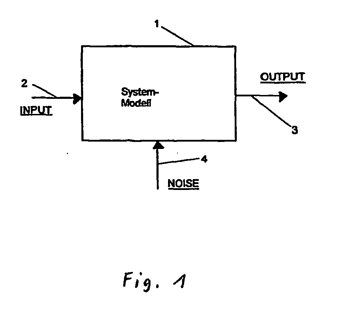

Figur 1 zeigt eine schematische Darstellung eines rauschbehafteten Systems, das simuliert werden soll. Das System wird durch ein als Kasten angedeutetes Systemmodell 1 beschrieben, das das Systemverhalten beschreibt. Das Systemverhalten ergibt sich aus den Eingangskanälen 2, die auch als Vektor $\underline{INPUT}$ bezeichnet werden, und aus den Ausgangskanäle 3, die auch als $\underline{OUTPUT}$ bezeichnet werden. Weiterhin ist ein systembedingtes Rauschen vorgesehen, das an Rauscheingangskanälen 4 anliegt und auch als Vektor $\underline{NOISE}$ bezeichnet wird.

Das Rauschen an den Rauscheingangskanälen 4 wird vorzugsweise als rauschbedingte Veränderung des Systemmodells 1 aufgefaßt.

Das Verhalten der Eingangskanäle 2 und der Ausgangskanäle 3 kann durch ein System von Differentialgleichungen oder durch ein System von Algebro-Differentialgleichungen beschrieben werden, so daß zuverlässige Vorhersagen des Systemverhaltens möglich sind.

Zu jedem Zeitschritt der Simulation des in Figur 1 gezeigten Systems wird für einen an den Eingangskanälen 2 anliegenden Vektor INPUT und für einen an den Rauscheingangskanälen 4 anliegenden Vektor NOISE ein Vektor OUTPUT der Ausgangskanäle 3 berechnet. Sinnvollerweise werden zur Simulation über einen längeren Zeitraum die Vektoren INPUT, OUTPUT, NOISE als Matrizen angegeben, wobei je eine Spalte der betreffenden Matritze die Werte der entsprechenden Zeitreihe des betreffenden INPUT, OUTPUT, NOISE enthält.

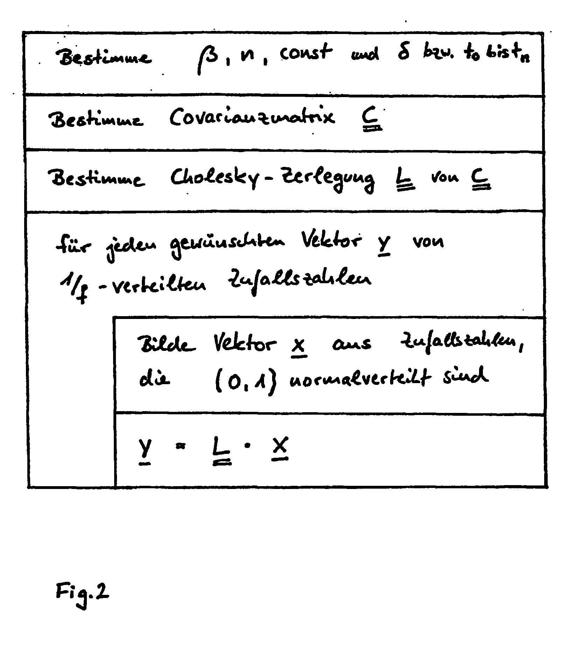

Figur 2 veranschaulicht, wie man zu je einem Vektor $\underline{y}$ gelangt, der eine Spalte der Matrix für die Rauscheingangskanäle 4 des Systemmodells 1 bildet.

In einem ersten Schritt wird zunächst unterschieden, ob ein Simulationsverfahren mit konstanter Schrittweite $\delta$ oder ein Verfahren mit adaptiver Schrittweite gemäß Betrachtungszeitpunkten $t_0$ bis $t_n$ durchgeführt werden soll. Außerdem muß ein gewünschter Spektralwert $\beta$, die Anzahl n der zu erzeugenden Zufallszahlen des 1/f-Rauschens sowie die Intensitätskonstante const festgelegt werden.

Im nächsten Schritt von Figur 2 wird die Covarianzmatrix $\underline{C}$ bestimmt, und zwar gemäß den in der Beschreibungseinleitung angegebenen Gleichungen für konstante Schrittweite bzw. für adaptive Schrittweite. Im nächsten Schritt wird die Cholesky-Zerlegung $\underline{L}$ der Covarianzmatrix $\underline{C}$ bestimmt.

Abschließend werden die einzelnen Spalten der an den Rauscheingangskanälen 4 anliegenden Matrix NOISE bestimmt. Jede Spalte entspricht einem Vektor $\underline{y}$ von insgesamt n 1/f-verteilten Zufallszahlen. Zunächst wird ein Vektor $\underline{x}$ aus n Zufallszahlen generiert, die (0,1) normalverteilt sind. Diese Zufallszahlen weisen den Erwartungswert 0 und die Varianz 1 auf. Danach wird der Vektor $\underline{x}$ mit der Cholesky-Zerlegung $\underline{L}$ multipliziert. Danach wird mit der Berechnung des nächsten gewünschten Vektors $\underline{y}$ von 1/f-verteilten Zufallszahlen fortgefahren, der die nächste Spalte der Matrix NOISE bildet.

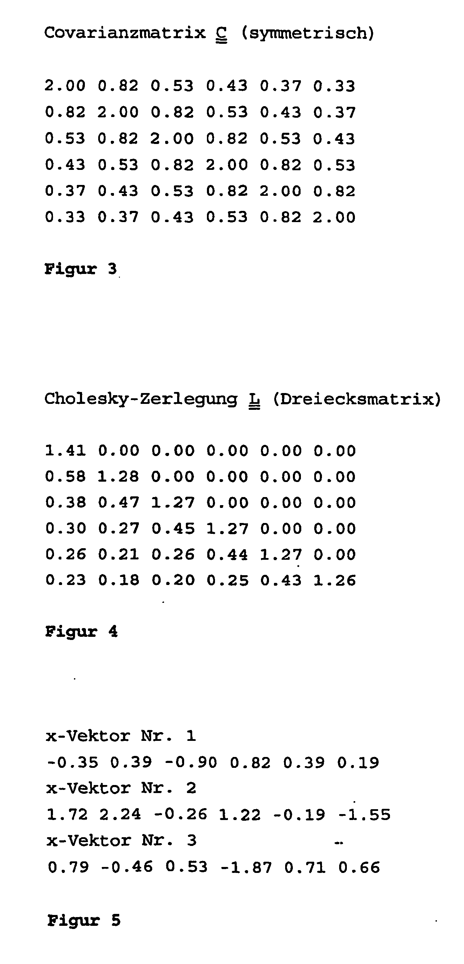

In den Figuren 3 bis 13 sind Ausführungsbeispiele wiedergegeben, die Berechnungsergebnisse wiedergeben. Bei jedem Ausführungsbeispiel werden jeweils die selben N(0,1)-Vektoren bzw. x-Vektoren verwendet. Alle Werte wurden nach genauer Rechnung nach der zweiten Kommastelle abgebrochen, um diese besser wiedergeben zu können.

Bei einem rechnerischen Nachvollziehen der Ausführungsbeispiele muß daher nicht mit den gezeigten Zwischenwerten, sondern mit den exakten Zwischenwerten weitergerechnet werden, um ausgehend von den angegebenen x-Vektoren zu den angegebenen y-Vektoren zu gelangen.

Der Wert $\beta$ wurde als 0.5 angenommen. Der Wert const wurde als 1.0 angenommen. Bei konstanter Schrittweite wurde stets $\delta = 1$ gesetzt.

Figur 3 zeigt eine Covarianzmatrix $\underline{C}$ der Dimension (6 x 6), zur Erzeugung eines Vektors $\underline{y}$ der Länge 6 von 1/f-verteilten Zufallszahlen bei einer konstanten Simulationsschrittweite $\delta$.

Die Covarianzmatrix $\underline{C}$ wurde nach der Formel

$$e(i,j) = const \cdot |\delta|^{\beta+1} \cdot \left( |i - j + 1|^{\beta+1} - 2|i - j|^{\beta+1} + |i - j - 1|^{\beta+1} \right)$$

berechnet. Die Dimension (6 $\underline{x}$ 6) ergibt sich aus der Länge der gewünschten $\underline{y}$-Vektoren n=6.

Beispielhaft wird die Berechnung des Elements e(1,1) = 2 von $\underline{C}$ nachvollzogen. Hierfür ist i=j=1.

$$e(1,1) = 1.0 \cdot |1|^{1+0.5} \cdot \left( |1 - 1 + 1|^{0.5+1} - 2|1 - 1|^{0.5+1} + |1 - 1 - 1|^{0.5+1} \right) =$$
$$= \qquad\qquad 1 \qquad - \qquad 0 \qquad + \qquad 1 \qquad = 2;$$

Figur 4 zeigt die Cholesky-Zerlegung $\underline{L}$ der Covarianzmatrix $\underline{C}$ aus Figur 3. Es gilt die Bedingung $\underline{C} = \underline{L} \cdot \underline{L}^T$. Dies kann durch Ausmultiplizieren des Elements (1,1) = $2^{0.5}$ von $\underline{L}$ anhand des Elements (1,1) = 2 von $\underline{C}$ überprüft werden, denn $(2^{0.5} \cdot 2^{0.5}) = 2$.

Figur 5 zeigt drei Vektoren $\underline{x}$ der Länge 6 aus (0,1) normalverteilten Zufallszahlen. Es ist dem Fachmann auf dem Gebiet der Statistik geläufig, wie man zu solchen Zufallszahlen mit dem Erwartungswert 0 und der Varianz 1 gelangt.

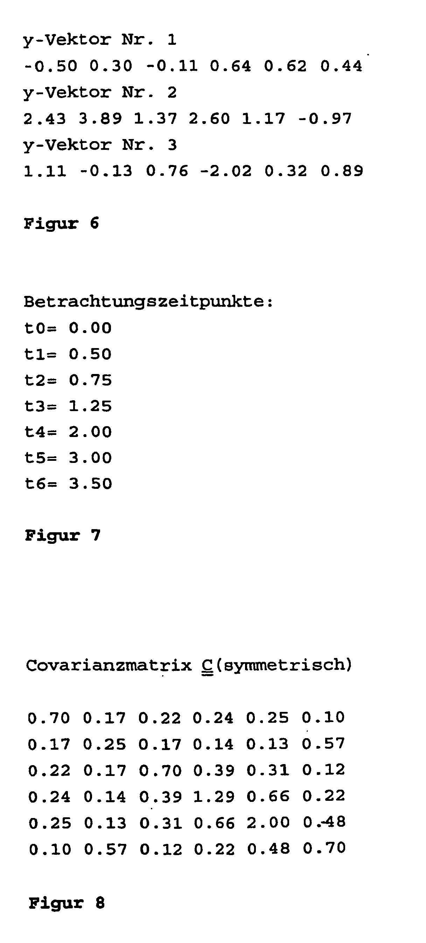

Figur 6 zeigt drei Vektoren $\underline{y}$ der Länge 6 mit 1/f-verteilten Zufallszahlen bei konstanter Schrittweite. Die Vektoren $\underline{y}$ ergeben sich aus der Multiplikation der Vektoren $\underline{x}$ gemäß Figur 5 mit der Cholesky-Zerlegung $\underline{L}$ gemäß Figur 4.

Figur 7 zeigt Betrachtungszeitpunkte $t_0$ bis $t_6$, wie sie gemäß einer adaptiven Erzeugung von 1/f-verteilten Zufallszahlen in einem weiteren Ausführungsbeispiel gewünscht werden. Die Betrachtungszeitpunkte $t_0$ bis $t_6$ ergeben sich aus einem hier nicht näher dargestellten ersten Simulationsschritt.

Figur 8 zeigt eine Covarianzmatrix $\underline{C}$ der Dimension (6 x 6), die aus den Betrachtungszeitpunkten aus Figur 7 berechnet worden ist.

Die Covarianzmatrix $\underline{C}$ wurde nach der Formel

$$e(i,j) = const \cdot \left( -\left| t_j - t_i \right|^{\beta+1} + \left| t_{j-1} - t_i \right|^{\beta+1} + \left| t_j - t_{i-1} \right|^{\beta+1} - \left| t_{j-1} - t_{i-1} \right|^{\beta+1} \right)$$

berechnet. Die Dimension (6 $\underline{x}$ 6) ergibt sich aus der Länge der gewünschten $\underline{y}$-Vektoren n=6.

Beispielhaft wird die Berechnung des Elements e(1,1) = 0.70 von $\underline{C}$ nachvollzogen. Hierfür ist i=j=1, $t_0$ = 0.00, $t_1$=0.50.

$$e(1,1) = 1 \cdot \left( -\left| t_1 - t_1 \right|^{0.5+1} + \left| t_0 - t_1 \right|^{0.5+1} + \left| t_1 - t_0 \right|^{0.5+1} - \left| t_0 - t_0 \right|^{0.5+1} \right) =$$

$$= \qquad\qquad 0.5^{1.5} \qquad + \quad 0.5^{1.5} \qquad\qquad\qquad = 0.707106781\ldots$$

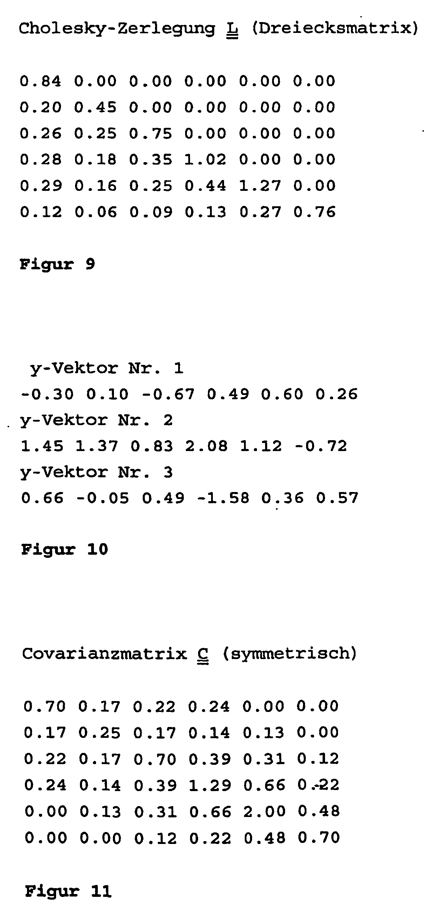

Figur 9 zeigt die Cholesky-Zerlegung $\underline{L}$ der Covarianzmatrix $\underline{C}$ aus Figur 9. Es gilt die Bedingung $\underline{C} = \underline{L} \cdot \underline{L}^T$. Dies kann durch Ausmultiplizieren des Elements (1,1) = 0.84... von $\underline{L}$ anhand des Elements (1,1) = 0.70... von $\underline{C}$ überprüft werden, denn (0.84... 0.84...) = 0.70...

Figur 10 zeigt drei Vektoren $\underline{y}$ der Länge 6 mit 1/f-verteilten Zufallszahlen bei adaptiver Schrittweite zu Betrachtungszeitpunkten nach Figur 7. Die Vektoren $\underline{y}$ ergeben sich aus der Multiplikation der Vektoren $\underline{x}$ gemäß Figur 5 mit der Cholesky-Zerlegung $\underline{L}$ gemäß Figur 9.

Figur 11 zeigt eine Covarianzmatrix $\underline{C}$ eines weiteren Ausführungsbeispiels einer Simulation mit adaptiver Schrittweite zu Betrachtungszeitpunkten nach Figur 7. Die Covarianzmatrix $\underline{C}$ nach Figur 11 stimmt im wesentlichen mit der Covarianzmatrix $\underline{C}$ nach Figur 8 überein. Die Berechnung der Covarianzmatrix $\underline{C}$ aus Figur 11 ist jedoch erheblich vereinfacht, weil die Elemente e (1, 5) , e (1, 6) , e(2,6) sowie e (5,1) , e (6,1) , e(6,2) einfach auf "0" gesetzt wurden. Somit brauchen diese nicht berechnet werden. Dies kann so interpretiert werden, daß der statistische Zusammenhang zwischen weiter entfernt liegenden 1/f-Zufallszahlen vernachlässigt wird. In manchen Simulationen ergibt sich auch so ein brauchbares Ergebnis.

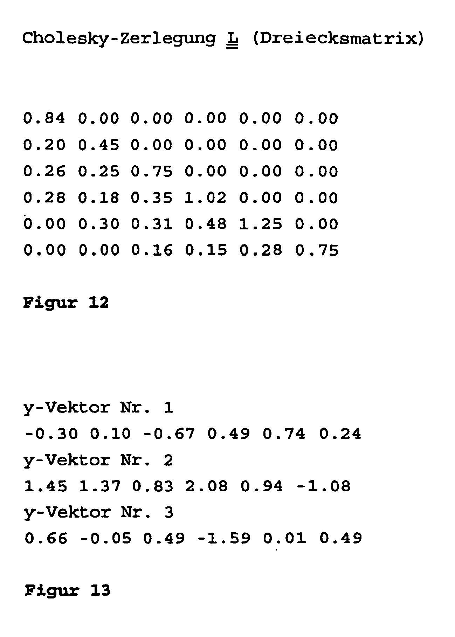

Figur 12 zeigt die Cholesky-Zerlegung $\underline{L}$ der Covarianzmatrix $\underline{C}$ aus Figur 13.

Figur 13 zeigt drei Vektoren $\underline{y}$ der Länge 6 mit verfälscht angenäherten 1/f-verteilten Zufallszahlen zu Zeitpunkten nach Figur 7.

**Patentansprüche**

1. Computergestütztes Verfahren zur numerischen Simulation eines Schaltkreises mit einer Schrittweite δ, der 1/f-Rauscheinflüssen unterworfen ist,

- wobei der Schaltkreis durch ein Modell (1) beschrieben wird, das Eingangskanäle (2), Rauscheingangskanäle (4) und Ausgangskanäle (3) aufweist,
- wobei das Verhalten der Eingangskanäle (2) und der Ausgangskanäle (3) durch ein System von Differentialgleichungen oder Algebro-Differentialgleichungen beschrieben wird,
- wobei für einen an den Eingangskanälen (2) anliegenden Eingangsvektor (INPUT) und einen an den Rauscheingangskanälen (4) anliegenden Rauschvektor (NOISE) $\underline{y}$ von 1/f-verteiltein Zufallszahlen ein Ausgangsvektor (OUTPUT) berechnet wird, und,
- wobei der Rauschvektor $\underline{y}$ durch folgende Schritte erzeugt wird:

- Bestimmen eines gewünschten Spektralwerts β des 1/f-Rauschens,
- Bestimmen eines Werts n für die Anzahl der zu erzeugenden Zufallszahlen eines 1/f-Rauschens,
- Bestimmen einer Intensitätskonstante const,

- Bilden einer Covarianzmatrix $\underline{C}$ der Dimension (n x n), wobei je ein Element e(i,j) der Covarianzmatrix $\underline{C}$ nach der folgenden Gleichung bestimmt wird:

$$e(i,j) = const \cdot |\delta|^{\beta+1} \ (|i-j+1|^{\beta+1} - 2|i-j|^{\beta+1} + |i-j-1|^{\beta+1})$$

wobei i,j = 1, ..., n
- Bilden der Cholesky-Zerlegung $\underline{L}$ der Covarianzmatrix $\underline{C}$,
wobei die folgenden Schritte für jede zu erzeugende Folge von Zufallszahlen eines 1/f-Rauschens ausgeführt werden:
- Bilden eines Vektors $\underline{x}$ der Länge n aus (0,1)-normalverteilten Zufallszahlen,
- Erzeugen des Vektors $\underline{y}$ der Länge n der gewünschten $1/f$-verteilten Zufallszahlen durch Multiplizieren der Cholesky-Zerlegung $\underline{L}$ mit dem Vektor $\underline{x}$.

2. Computergestütztes Verfahren zur numerischen Simulation eines Schaltkreises zu Betrachtungszeitpunkten $t_0$ bis $t_n$, der 1/f-Rauscheinflüssen unterworfen ist,

- wobei der Schaltkreis durch ein Modell (1) beschrieben wird, das Eingangskanäle (2), Rauscheingangskanäle (4) und Ausgangskanäle (3) aufweist,
- wobei das Verhalten der Eingangskanäle (2) und der Ausgangskanäle (3) durch ein System von Differentialgleichungen oder Algebro-Differentialgleichungen beschrieben wird,
- wobei für einen an den Eingangskanälen (2) anliegenden Eingangsvektor (INPUT) und einen an den Rauscheingangskanälen (4) anliegenden Rauschvektor (NOISE) $\underline{y}$ von 1/f-verteilten Zufallszahlen ein Ausgangsvektor (OUTPUT) berechnet wird, und
- wobei der Rauschvektor $\underline{y}$ durch folgende Schritte erzeugt wird:

- Bestimmen eines Werts n für die Anzahl der zu erzeugenden Zufallszahlen eines 1/f-Rauschens,
- Bestimmen einer Intensitätskonstante const,
- Bestimmen eines gewünschten Spektralwerts $\beta$ des 1/f-Rauschens,
- Bilden einer Covarianzmatrix $\underline{C}$ der Dimension (n x n), wobei je ein Element e(i,j) der Covarianzmatrix $\underline{C}$ nach der folgenden Gleichung bestimmt wird:

$$e(i,j) = const \cdot (-|t_j - t_i|^{\beta+1} + |t_{j-1} - t_i|^{\beta+1} + |t_j - t_{i-1}|^{\beta+1} - |t_{j-1} - t_{i-1}|^{\beta+1})$$

wobei i,j = 1, ..., n
- Bilden der Cholesky-Zerlegung $\underline{L}$ der Covarianzmatrix $\underline{C}$,
wobei die folgenden Schritte für jede zu erzeugende Folge von Zufallszahlen eines 1/f-Rauschens ausgeführt werden:
- Bilden eines Vektors $\underline{x}$ der Länge n aus (0,1)-normalverteilten Zufallszahlen,
- Erzeugen des Vektors $\underline{y}$ der Länge n der gewünschten 1/f-verteilten Zufallszahlen durch Multiplizieren der Cholesky-Zerlegung $\underline{L}$ mit dem Vektor $\underline{x}$.

3. Verfahren nach Anspruch 1 oder 2, wobei nicht alle Elemente der Covarianzmatrix $\underline{C}$ bestimmt werden, wobei die nicht berechneten Elemente mit dem Wert 0 besetzt werden.

4. Computerprogramm zur Ausführung eines Verfahrens gemäß einem der Ansprüche 1 bis 3.

5. Datenträger mit einem Computerprogramm nach Anspruch 4.

6. Computersystem, auf dem ein Computerprogramm nach Anspruch 4 geladen ist.

**Claims**

1. Computer-aided method for numerical simulation of a circuit with a step width δ, and which is subject to 1/f noise influences,

   - in which the circuit is described by a model (1) which has input channels (2), noise input channels (4) and output channels (3),
   - in which the behaviour of the input channels (2) and of the output channels (3) is described by a system of differential equations or algebraic-differential equations,
   - in which an output vector (OUTPUT) is calculated by 1/f-distributed random numbers for an input vector (INPUT) present on the input channels (2), and for a noise vector (NOISE) y present on the noise input channels (4), and
   - in which the noise vector y is generated by the following steps:

      - determining a desired spectral value P of the 1/f noise,
      - determining a value n for the number of the random numbers, to be generated, of a 1/f noise,
      - determining an intensity constant const,
      - forming a covariance matrix $\underline{C}$ of dimension (n × n), one element e(i, j) each of the covariance matrix $\underline{C}$ being determined using the following equation:

$$e(i,j) = const \cdot |\delta|^{\beta+1} \cdot \left( |i-j+1|^{\beta+1} - 2|i-j|^{\beta+1} + |i-j-1|^{\beta+1} \right)$$

      where i,j = 1, ..., n
      - forming the Cholesky decomposition $\underline{L}$ of the covariance matrix $\underline{C}$,
      the following steps being carried out for each sequence, to be generated, of random numbers of a 1/f noise:
      - forming a vector $\underline{x}$ of length n from random numbers normally distributed in (0,1), and
      - generating a vector $\underline{y}$ of length n of the desired 1/f-distributed random numbers by multiplying the Cholesky decomposition $\underline{L}$ by the vector $\underline{x}$.

2. Computer-aided method for numerical simulation of a circuit at observation instants to to $t_n$, which circuit is subject to 1/f noise influences,

   - in which the circuit is described by a model (1) which has input channels (2), noise input channels (4) and output channels (3),
   - in which the behaviour of the input channels (2) and of the output channels (3) is described by a system of differential equations or algebraic-differential equations,
   - in which an output vector (OUTPUT) is calculated by 1/f-distributed random numbers for an input vector (INPUT) present on the input channels (2), and for a noise vector (NOISE) y present on the noise input channels (4), and
   - in which the noise vector $\underline{y}$ is generated by the following steps:

      - determining a value n for the number of the random numbers, to be generated, of a 1/f noise,
      - determining an intensity constant const,
      - determining a desired spectral value β of the 1/f noise,
      - forming a covariance matrix $\underline{C}$ of dimension (n x n), one element e(i,j) each of the covariance matrix $\underline{C}$ being determined using the following equation:

$$e(i,j) = const \cdot \left( -|t_j - t_i|^{\beta+1} + |t_{j-1} - t_i|^{\beta+1} + |t_j - t_{i-1}|^{\beta+1} - |t_{j-1} - t_{i-1}|^{\beta+1} \right)$$

      where i,j = 1, ..., n
      - forming the Cholesky decomposition $\underline{L}$ of the covariance matrix $\underline{C}$,
      the following steps being carried out for each sequence, to be generated, of random numbers of a 1/f noise:

- forming a vector $\underline{x}$ of length n from random numbers normally distributed in (0,1), and
- generating a vector $\underline{y}$ of length n of the desired 1/f-distributed random numbers by multiplying the Cholesky decomposition $\underline{L}$ by the vector $\underline{x}$.

3. Method according to Claim 1 or 2, in which not all elements of the covariance matrix $\underline{C}$ are determined, the non-calculated elements being occupied by the value 0.

4. Computer program for carrying out a method in accordance with one of Claims 1 to 3.

5. Data medium having a computer program according to Claim 4.

6. Computer system on which a computer program according to Claim 4 is loaded.

**Revendications**

1. Procédé assisté par ordinateur, de simulation numérique d'un circuit ayant une grandeur de pas $\delta$ soumise à l'influence d'un bruit 1/f,

- le circuit étant décrit par un modèle (1) qui présente des canaux d'entrée (2), des canaux d'entrée de bruit (4) et des canaux de sortie (3),
- le comportement des canaux d'entrée (2) et des canaux de sortie (3) étant décrit par un système d'équations différentielles ou d'équations algébriques différentielles,
- un vecteur de sortie (OUTPUT) étant calculé pour un vecteur d'entrée (INPUT) appliqué aux canaux d'entrée (2) et un vecteur de bruit (NOISE) $\underline{y}$ de nombres aléatoires à distribution 1/f, appliqué aux canaux d'entrée de bruit (4), et
- le vecteur de bruit $\underline{y}$ étant produit par les étapes suivantes :

  - détermination d'une valeur spectrale souhaitée ß du bruit 1/f,
  - détermination d'une valeur n du nombre de nombres aléatoires à générer d'un bruit 1/f,
  - détermination d'une constante d'intensité const,
  - formation d'une matrice de covariance $\underline{C}$ de dimensions (n x n), un élément e(i, j) de la matrice de covariance $\underline{C}$ étant à chaque fois défini d'après l'équation suivantes :

$$e(i, j) = const.|\delta|^{\beta+1} \cdot (|i-j+1|^{\beta+1} - 2|i-j|^{\beta+1} + |i-j-1|^{\beta+1})$$

  où i, j = 1, ..., n
  - formation de la factorisation de Cholesky $\underline{L}$ de la matrice de covariance $\underline{C}$, les étapes suivantes étant exécutées pour chaque série de nombres aléatoires à générer d'un bruit 1/f :
  - formation d'un vecteur $\underline{x}$ de longueur n à partir de (0,1) nombres aléatoires distribués normalement,
  - génération du vecteur $\underline{y}$ de longueur n des nombres aléatoires à distribution 1/f souhaités en multipliant la factorisation de Cholesky $\underline{L}$ par le vecteur $\underline{x}$.

2. Procédé assisté par ordinateur, de simulation numérique d'un circuit en des instants d'observation $t_0$ à $t_n$, qui est soumis à l'influence d'un bruit 1/f,

  - le circuit étant décrit par un modèle (1) qui présente des canaux d'entrée (2), des canaux d'entrée de bruit (4) et des canaux de sortie (3),
  - le comportement des canaux d'entrée (2) et des canaux de sortie (3) étant décrit par un système d'équations différentielles ou d'équations algébriques différentielles,
  - un vecteur de sortie (OUTPUT) étant calculé pour un vecteur d'entrée (INPUT) appliqué aux canaux d'entrée (2) et un vecteur de bruit (NOISE) $\underline{y}$ de nombres aléatoires à distribution 1/f, appliqué aux canaux d'entrée de bruit (4), et
  - le vecteur de bruit $\underline{y}$ étant produit par les étapes suivantes :

    - détermination d'une valeur n du nombre de nombres aléatoires à générer d'un bruit 1/f,

- détermination d'une constante d'intensité const,
- détermination d'une valeur spectrale souhaitée β bruit 1/f,
- formation d'une matrice de covariance $\underline{C}$ de dimensions (n x n), un élément e(i, j) de la matrice de covariance $\underline{C}$ étant à chaque fois défini d'après l'équation suivantes :

$$e(i, \; j) \; = \; \text{const}.(-|t_j - t_i|^{\beta+1} + |t_{j-1} - t|^{\beta+1} + |t_j - t_{i-1}|^{\beta+1} - |t_{j-1} - t_{i-1}|^{\beta+1})$$

où i, j = 1, ..., n
- formation de la factorisation de Cholesky $\underline{L}$ de la matrice de covariance $\underline{C}$, les étapes suivantes étant exécutées pour chaque série de nombres aléatoires à générer d'un bruit 1/f :
- formation d'un vecteur $\underline{x}$ de longueur n à partir de (0,1) nombres aléatoires distribués normalement,
- génération d'un vecteur $\underline{y}$ de longueur n des nombres aléatoires à distribution 1/f souhaités en multipliant la factorisation de Cholesky $\underline{L}$ par le vecteur $\underline{x}$.

3. Procédé selon la revendication 1 ou 2, dans lequel tous les éléments de la matrice de covariance $\underline{C}$ ne sont pas définis, les éléments non calculés étant occupés par la valeur 0.

4. Programme informatique de mise en oeuvre d'un procédé selon l'une des revendications 1 à 3.

5. Support de données comprenant un programme informatique selon la revendication 4.

6. Système informatique sur lequel est chargé un programme informatique selon la revendication 4.

1

2

OUTPUT

INPUT

System-
Modell

3

4

NOISE

Fig. 1

Bestimme $\beta$, n, const und $\delta$ bzw. $t_0$ bis $t_n$

Bestimme Covarianzmatrix $\underline{C}$

Bestimme Cholesky-Zerlegung $\underline{L}$ von $\underline{C}$

für jeden gewünschten Vektor $\underline{y}$ von $1/f$-verteilten Zufallszahlen

Bilde Vektor $\underline{x}$ aus Zufallszahlen, die $(0,1)$ normalverteilt sind

$$\underline{y} = \underline{L} \cdot \underline{x}$$

Fig.2

Covarianzmatrix $\underline{C}$ (symmetrisch)

```
2.00 0.82 0.53 0.43 0.37 0.33
0.82 2.00 0.82 0.53 0.43 0.37
0.53 0.82 2.00 0.82 0.53 0.43
0.43 0.53 0.82 2.00 0.82 0.53
0.37 0.43 0.53 0.82 2.00 0.82
0.33 0.37 0.43 0.53 0.82 2.00
```

**Figur 3**

Cholesky-Zerlegung $\underline{L}$ (Dreiecksmatrix)

```
1.41 0.00 0.00 0.00 0.00 0.00
0.58 1.28 0.00 0.00 0.00 0.00
0.38 0.47 1.27 0.00 0.00 0.00
0.30 0.27 0.45 1.27 0.00 0.00
0.26 0.21 0.26 0.44 1.27 0.00
0.23 0.18 0.20 0.25 0.43 1.26
```

**Figur 4**

x-Vektor Nr. 1
-0.35 0.39 -0.90 0.82 0.39 0.19
x-Vektor Nr. 2
1.72 2.24 -0.26 1.22 -0.19 -1.55
x-Vektor Nr. 3
0.79 -0.46 0.53 -1.87 0.71 0.66

**Figur 5**

y-Vektor Nr. 1
-0.50 0.30 -0.11 0.64 0.62 0.44
y-Vektor Nr. 2
2.43 3.89 1.37 2.60 1.17 -0.97
y-Vektor Nr. 3
1.11 -0.13 0.76 -2.02 0.32 0.89

**Figur 6**


Betrachtungszeitpunkte:
t0= 0.00
t1= 0.50
t2= 0.75
t3= 1.25
t4= 2.00
t5= 3.00
t6= 3.50

**Figur 7**


Covarianzmatrix $\underline{C}$ (symmetrisch)

0.70 0.17 0.22 0.24 0.25 0.10
0.17 0.25 0.17 0.14 0.13 0.57
0.22 0.17 0.70 0.39 0.31 0.12
0.24 0.14 0.39 1.29 0.66 0.22
0.25 0.13 0.31 0.66 2.00 0.48
0.10 0.57 0.12 0.22 0.48 0.70

**Figur 8**

Cholesky-Zerlegung $\underline{\underline{L}}$ (Dreiecksmatrix)

```
0.84 0.00 0.00 0.00 0.00 0.00
0.20 0.45 0.00 0.00 0.00 0.00
0.26 0.25 0.75 0.00 0.00 0.00
0.28 0.18 0.35 1.02 0.00 0.00
0.29 0.16 0.25 0.44 1.27 0.00
0.12 0.06 0.09 0.13 0.27 0.76
```

**Figur 9**

y-Vektor Nr. 1
```
-0.30 0.10 -0.67 0.49 0.60 0.26
```
y-Vektor Nr. 2
```
1.45 1.37 0.83 2.08 1.12 -0.72
```
y-Vektor Nr. 3
```
0.66 -0.05 0.49 -1.58 0.36 0.57
```

**Figur 10**

Covarianzmatrix $\underline{\underline{C}}$ (symmetrisch)

```
0.70 0.17 0.22 0.24 0.00 0.00
0.17 0.25 0.17 0.14 0.13 0.00
0.22 0.17 0.70 0.39 0.31 0.12
0.24 0.14 0.39 1.29 0.66 0.22
0.00 0.13 0.31 0.66 2.00 0.48
0.00 0.00 0.12 0.22 0.48 0.70
```

**Figur 11**

Cholesky-Zerlegung $\underline{\underline{L}}$ (Dreiecksmatrix)

```
0.84 0.00 0.00 0.00 0.00 0.00
0.20 0.45 0.00 0.00 0.00 0.00
0.26 0.25 0.75 0.00 0.00 0.00
0.28 0.18 0.35 1.02 0.00 0.00
0.00 0.30 0.31 0.48 1.25 0.00
0.00 0.00 0.16 0.15 0.28 0.75
```

**Figur 12**

```
y-Vektor Nr. 1
-0.30 0.10 -0.67 0.49 0.74 0.24
y-Vektor Nr. 2
1.45 1.37 0.83 2.08 0.94 -1.08
y-Vektor Nr. 3
0.66 -0.05 0.49 -1.59 0.01 0.49
```

**Figur 13**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 5719784 A
- US 6161075 A

- US 4255791 A

**In der Beschreibung aufgeführte Nicht-Patentliteratur**

- **MATT PERRY.** *Personal Engineering and Instrumentation News,* Marz 1994, 65-71